# EUROPEAN PATENT APPLICATION

(11) **EP 4 840 698 A2**
(43) Date of publication of application: **18.11.2026**
(21) Application number: 26175267.9
(22) Date of filing: 28.04.2026
(51) Int. Cl.: B60N 3/02

(54) **GRAB HANDLE FOR A MACHINE**

(30) Priority: 13.05.2025 US 202519206415
(71) Applicant: Caterpillar, Inc., Peoria, IL 61629-6450 (US)
(72) Inventor: RIES, Michael, Andover 55304 (US); COTTERMAN, Craig, Fairborn 45324 (US); COOPMANS, Ryan, Mount Pulaski 62548 (US)
(74) Representative: Wagner & Geyer

(57) **Abstract**

A grab handle (118, 120, 122, 126) for providing one or more contact points for an operator on an exterior (106) of a machine (100). The grab handle (118, 120, 122, 126) comprises one or more handle units (124), each defining an engagement surface (136) at a first end (128) of each handle unit (124) for engaging the machine (100). The handle unit (124) further includes an expansion profile (144) at a second end (132) of each handle unit (124) opposite the first end (128). The handle unit (124) further includes a grab surface (156), including one or more grab lengths (160), defined between the engagement surface (136) and the expansion profile (144). The handle unit (124) further includes an interlocking unit (164) that defines first and second interlocking profiles (168, 176) at respective first and second opposite ends (166,172) of the interlocking unit (144). The first and second interlocking profiles (168, 176) of the interlocking unit (164), are to be coupled with respective first and second expansion profiles (146, 148) of first and second handle units (124', 124") to form a first configuration of the grab handle (118, 120, 122, 126).

## Description

### Technical Field

The present disclosure relates to machines that include user contact points on the machine exterior. More particularly, the present disclosure relates to a grab handle for such a machine.

### Background

Machines (e.g., mobile machines), such as pavers, haul trucks, dozers, motor graders, excavators, wheel loaders, and other types of equipment, are widely used in various construction, mining, and agricultural applications. These machines are equipped with multiple systems, such as a power system, an implement control system, an implement attachment system, one or more implements, an operator cabin, and the like, which enable the machines to perform various operations.

To provide access to the different systems, for example, for operation or servicing, different machines may require multiple user contact points, such as grab handles of varying sizes. This variation may be based on the shape, size, and configuration of each machine or machine type. Consequently, this may lead to increased costs for the machines and greater cost for inventory management.

Korean Patent No. 100841687 discloses a mounting structure of an assist grip handle for a vehicle to protect a head of an occupant upon a vehicle accident by minimizing a part of the assist grip handle protruding into an interior of the vehicle. A mounting structure of an assist grip handle for a vehicle comprises two mounting sections mounted on an internal panel of the vehicle while being spaced apart from each other by a predetermined distance. Two links are mounted on the two mounting sections, respectively, by movable pins. A grip is elastically coupled between the two links. Springs and dampers are provided in the links while being offset from each other. The grip includes a side grip surrounding the links, a handle detachably coupled to the side grip, and a handle cover.

### Summary of the Invention

In an embodiment, the present disclosure relates to a grab handle for providing one or more contact points for an operator on an exterior of a machine. The grab handle comprises one or more handle units. Each handle unit of the one or more handle units defines an engagement surface at a first end of each handle unit for engaging the machine. The handle unit further includes a bore coincident with the engagement surface and configured to receive a fastener within the bore to be coupled with the machine. Also, the handle unit includes an expansion profile at a second end of each handle unit opposite the first end. Further, the handle unit includes a grab surface, including one or more grab lengths, defined between the engagement surface and the expansion profile. Each grab length, of the one or more grab lengths, defines a standardized length of grab space for engagement by the operator. In addition, the handle unit includes an interlocking unit that defines first and second interlocking profiles at respective first and second opposite ends of the interlocking unit. In a first configuration of the grab handle, the first and second interlocking profiles of the interlocking unit, are to be coupled with respective first and second expansion profiles of first and second handle units to form the first configuration of the grab handle.

In another embodiment, the present disclosure relates to a grab handle for providing one or more contact points for an operator on an exterior of a machine. The grab handle comprises one or more handle units. Each handle unit of the one or more handle units defines a first handle engagement surface at a first end of each handle unit for engaging an adjacent handle unit. The handle unit further defines a first machine engagement surface at the first end of each handle unit for engaging the machine. The handle unit further defines a first bore coincident with the first handle engagement surface and the first machine engagement surface and configured to receive a first fastener within the first bore to be coupled with the machine. The handle unit further defines a second handle engagement surface at a second end of each handle unit opposite the first end. The handle unit further defines a second machine engagement surface at the second end of each handle unit. Further, the handle unit defines a second bore coincident with the second handle engagement surface and the second machine engagement surface and configured to receive a second fastener within the second bore to be coupled with the machine. The first and second handle engagement surfaces face in opposite directions from each other. Further, the first and second machine engagement surfaces face in opposite directions from each other. The handle unit further defines a grab surface, including one or more grab lengths, defined between the first end and the second end. Each grab length, of the one or more grab lengths, defines a standardized length of grab space for engagement by the operator. The handle unit further defines a termination unit that defines a third handle engagement surface, a third machine engagement surface. The termination unit further includes a third bore coincident with the third handle engagement surface and the third machine engagement surface and configured to receive the second fastener or a third fastener within the third bore to be coupled with the machine.

In yet another embodiment, the present disclosure relates to a method for installing a grab handle for providing one or more contact points for an operator on an exterior of a machine. The method includes attaching one or more handle units to the machine. Each handle unit of the one or more handle units defines an engagement surface at a first end of each handle unit for engaging the machine. The handle unit further includes a bore coincident with the engagement surface and configured to receive a fastener within the bore to be coupled with the machine. further, the handle unit includes an expansion profile at a second end of each handle unit opposite the first end. Also, the handle unit includes a grab surface, including one or more grab lengths, defined between the engagement surface and the expansion profile. Each grab length, of the one or more grab lengths, defines a standardized length of grab space for engagement by the operator. Further, the method includes attaching, in a first configuration of the grab handle, an interlocking unit between first and second handle units, of the one or more handle units. The interlocking unit defines first and second interlocking profiles at respective first and second opposite ends of the interlocking unit. The first and second interlocking profiles of the interlocking unit are coupled with respective first and second expansion profiles of the first and second handle units to attach the interlocking unit between the first and second handle units.

### Brief Description of the Drawings

FIG. 1 is a perspective view of an exemplary machine having multiple grab handles attached to a frame of the machine, in accordance with an embodiment of the present disclosure;
FIG. 2 is an exploded view of a grab handle, of multiple grab handles of FIG. 1, in accordance with an embodiment of the present disclosure;
FIG. 3 is a perspective view of the grab handle of FIG. 2, in accordance with an embodiment of the present disclosure; and
FIG. 4 is an exploded view of another grab handle of multiple grab handles of FIG. 1, in accordance with an embodiment of the present disclosure;
FIG. 5 is a perspective view of the grab handle of FIG. 4 in the second configuration, in accordance with an embodiment of the present disclosure;
FIG. 6 is a perspective view of yet another grab handle of multiple grab handles of FIG. 1, in accordance with an embodiment of the present disclosure;
FIG. 7 is an exploded view of a grab handle, of multiple grab handles, in accordance with another embodiment of the present disclosure;
FIG. 8 is a perspective view of the grab handle of FIG. 7, in accordance with another embodiment of the present disclosure; and
FIG. 9 is a flowchart illustrating a method for installing a grab handle on an exterior of the machine, in accordance with an embodiment of the present disclosure.

### Detailed Description

Reference will now be made in detail to specific embodiments or features, examples of which are illustrated in the accompanying drawings. Wherever possible, the same reference numbers will be used throughout the drawings to refer to the same or the like parts.

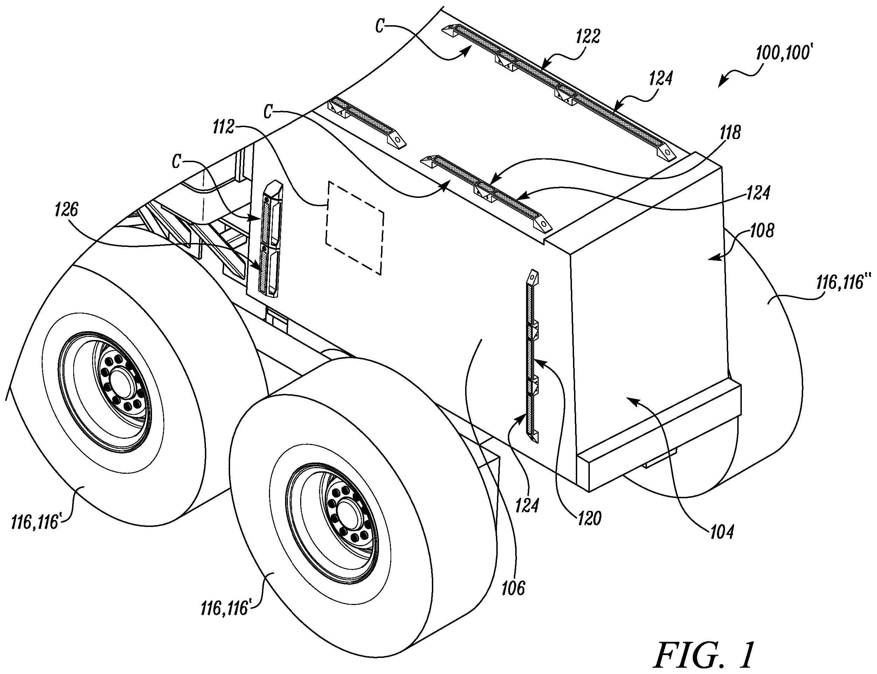

Referring to FIG. 1, an exemplary machine 100 is shown. The machine 100 may perform various operations associated with an industry such as construction, mining, farming, transportation, or any other industry known in the art. As an example, the machine 100 is embodied as motor grader 100' configured to perform functions, such as earth altering functions, including displacing, spreading, distributing, leveling, and grading materials, such as soil, over a ground surface or a work surface, via one or more implements thereof.

In other embodiments, however, the machine 100 may be other types of machines related to various industries, including, as examples, construction, agriculture, forestry, transportation, material handling, waste management, and so on. Accordingly, although a number of examples are described with reference to the motor grader 100', examples according to this disclosure are also applicable to other types of machines including loaders, scrapers, dozers, excavators, compactors, material haulers like dump trucks, along with other example machine types.

The machine 100 includes a frame 104 for supporting a plurality of systems 108 of the machine 100. The plurality of systems 108 may include a propulsion system, a transmission system, an implement control system, an implement attachment system, one or more implements, and the like. The machine 100 may further define an exterior 106. In an example, the exterior 106 may be an exterior portion of the frame 104 of the machine 100.

The machine 100 further includes a power source 112 for powering operations of the plurality of systems 108. The power source 112 may be an internal combustion engine like petrol engine or a diesel engine, an electrical source like a series of batteries, or the like. In an example, the power source 112 may be configured to power the propulsion system, or the transmission system. The machine 100 may further incudes one or more traction devices 116 (e.g., left side traction devices 116' and right side traction devices 116") for moving the machine 100.

The machine 100 includes grab handles, in multiple exemplary configurations, for providing one or more contact points, C, for an operator on the frame 104. For example, the machine 100 includes a grab handle 118, a grab handle 120, a grab handle 122, and a grab handle 126. The contact point, C, may be a point on the frame 104 of the machine 100 which may be used by the operator for performing an operation of the machine 100. For example, a contact point on a cab (not shown) may be used by the operator to get inside the cab.

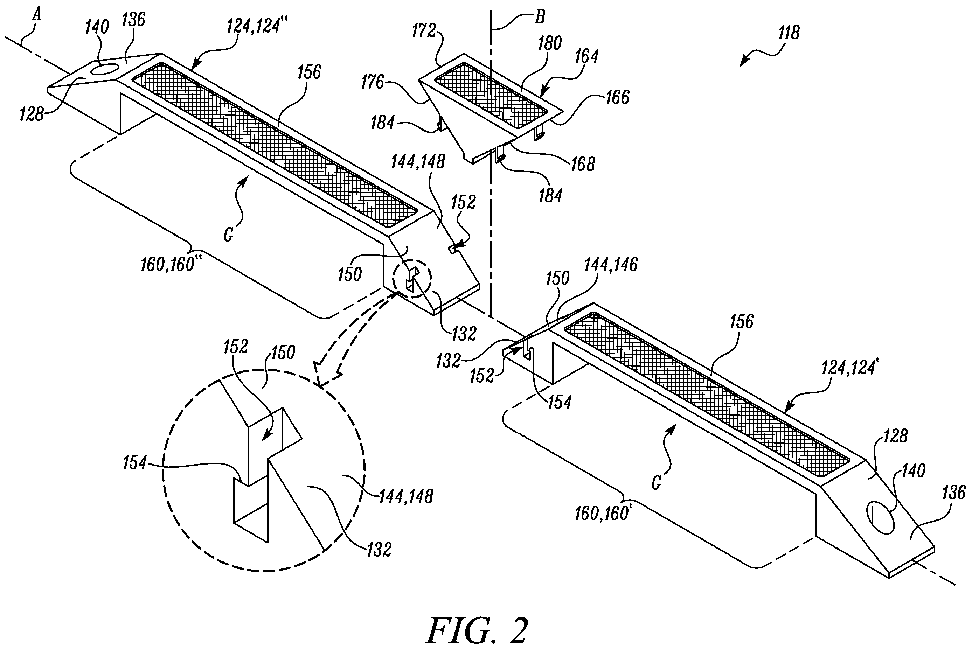

Referring to FIGS 2-3, the grab handle 118 is discussed. The grab handle 118 includes one or more handle units 124. Further, the grab handle 118 may define a longitudinal axis, *A*, along the length of the handle unit 124. In an example, the grab handle 118 may include two handle units 124, namely - a first handle unit 124' and a second handle unit 124". The first handle unit 124' and the second handle unit 124" are substantially similar in shape and size. Each handle unit 124 (i.e., the first handle unit 124' and the second handle unit 124") defines a first end 128 and a second end 132 away from the first end 128.

The handle unit 124 defines an engagement surface 136 at the first end 128 of the handle unit 124 to facilitate engagement of the handle unit 124 with the machine 100. For example, the engagement surface 136 may be configured to attach the first end 128 to the frame 104 of the machine 100. The handle unit 124 further defines a bore 140 coincident with the engagement surface 136. The bore 140 is configured to receive a fastener (not shown) within the bore 140 to be coupled with the machine 100. For example, the first end 128 of the handle unit 124 may be attached to the machine 100 by using the fastener which may be received within the bore 140 of the engagement surface 136.

The handle unit 124 further includes an expansion profile 144 at the second end 132 of the handle unit 124 opposite the first end 128. The expansion profile 144 may be configured to facilitate the expansion of the grab handle 118 by joining the handle units 124 together. In an example, the first handle unit 124' may include a first expansion profile 146 and the second handle unit 124" may include a second expansion profile 148. Each expansion profile 144 (e.g., the first expansion profile 146 and the second expansion profile 148) may include a surface 150 defining one or more grooves 152 disposed thereon. The grooves 152 may include shoulder 154 within the grooves 152 (see FIG. 2).

The handle unit 124 further includes a grab surface 156, including one or more grab lengths 160, defined between the engagement surface 136 and the expansion profile 144. In an example, the grab surface 156 may be defined as a surface for the operator to grab the grab handle 118. In an example, the grab surface 156 may be defined along the longitudinal axis, *A*, of the grab handle 118.

In an example, the first handle unit 124' and the second handle unit 124" may define grab lengths 160. Each grab length 160, of the one or more grab lengths 160, defines a standardized length of a grab space, G, for engagement by the operator. In an example, the standardized length of the grab space, G, is based on ISO 2867:2011. In an example, the first handle unit 124' may include a first grab length 160' and the second handle unit 124" may include a second grab length 160". In an embodiment, as shown in FIG. 2, the first grab length 160' and the second grab length 160" are equal. In another embodiment, the first grab length 160' and the second grab length 160" are different. For example, the first handle unit 124' may consist of one grab length 160 and the second handle unit 124' may consist of two grab lengths 160.

The handle unit 124 further includes an interlocking unit 164. The interlocking unit 164 defines a first end 166 and a second end 172 opposite to the first end 166. The interlocking unit 164 defines a first interlocking profile 168 at the first end 166 of the interlocking unit 164. Further, the interlocking unit 164 defines a second interlocking profile 176 at the second end 172 of the interlocking unit 164. In an example, the first interlocking profile 168 and the second interlocking profile 176 are the same. In an example, the interlocking unit 164 may include an outer surface 180 disposed between the first interlocking profile 168 and the second interlocking profile 176. In an example, the outer surface 180 may be same as the grab surface 156 of the handle unit 124.

In an example, the first interlocking profile 168 and the second interlocking profile 176 of the interlocking unit 164 may include one or more portions 184 (e.g., locking portions 184) disposed thereon. The locking portions 184 may be configured to be received within their corresponding grooves 152 of the expansion profile 144 to lock the interlocking unit 164 on the expansion profile 144. That is, the interlocking unit 164 may be snap fitted to the expansion profile 144 of the grab handle 118.

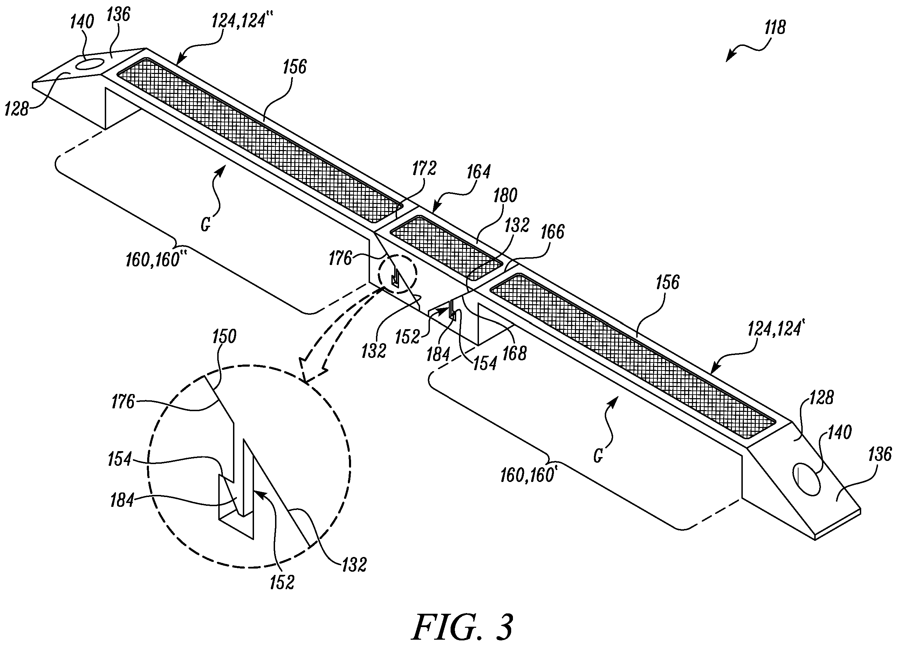

FIGS 2 and 3 illustrate the grab handle 118 in its first configuration. In the first configuration of the grab handle 118, the first and second interlocking profiles of the interlocking unit 164, are to be coupled with respective first handle unit 124' and the second expansion profile 148 of the first handle unit 124' and the second handle unit 124', of the one or more handle units 124, to form the first configuration of the grab handle 118. For example, the first interlocking profile 168 of the interlocking unit 164 may be configured to be coupled with the first expansion profile 146 of the first handle unit 124'.

Similarly, the second interlocking profile 176 of the interlocking unit 164 may be configured to be coupled with the second expansion profile 148 of the second handle unit 124" to form the first configuration of the grab handle 118. When the interlocking unit 164 is locked on the expansion profile 144, the interlocking unit 164 may be configured to flush with the grab surface 156 of the one or more handle units 124. For example, the outer surface 180 of the interlocking unit 164 may flush with the grab surface 156 of the handle unit 124.

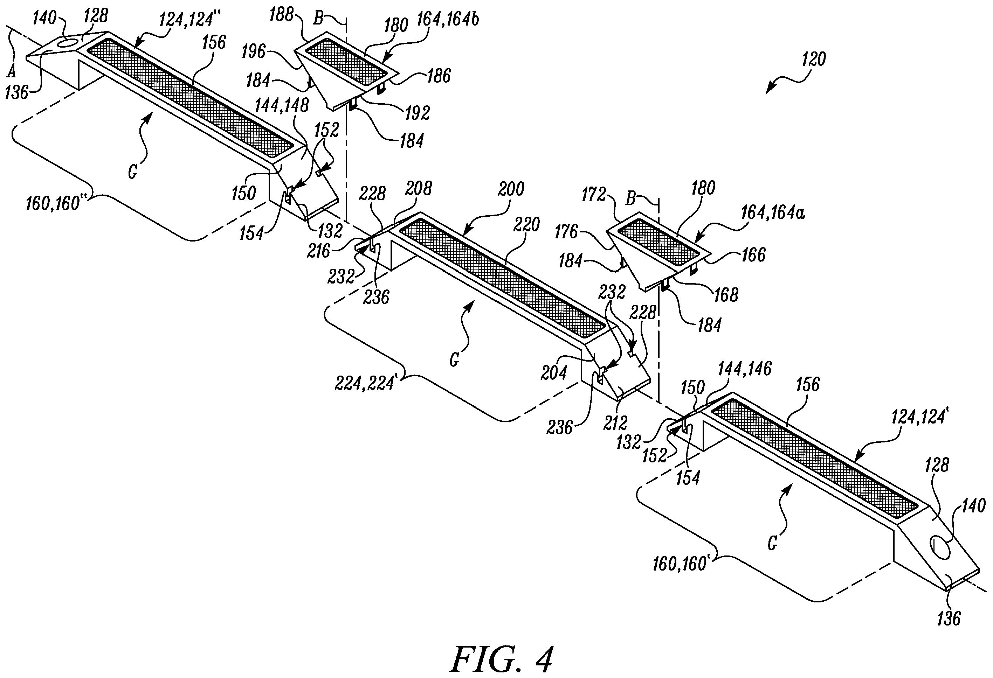

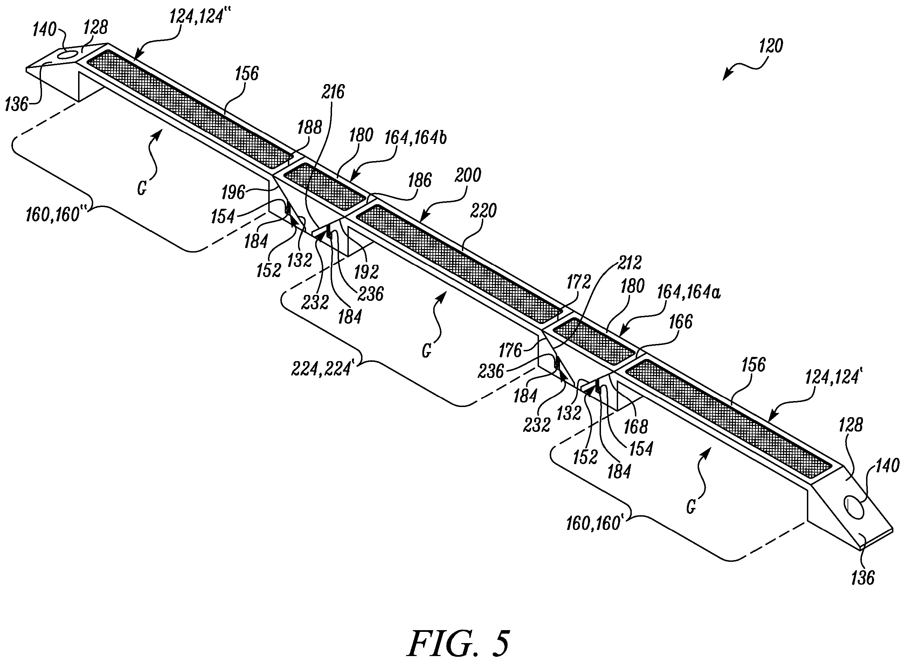

FIGS 4 and 5 illustrate the grab handle 120 (i.e., second configuration of the grab handle). In the second configuration, the grab handle 120 is formed of three handle units. For example, the grab handle 120 includes the first handle unit 124', the second handle unit 124" and a center handle unit 200. In an example, the first handle unit 124' and the second handle unit 124" are similar to the respective first handle unit 124' and the second handle unit 124" of the grab handle 118. In an example, the first handle unit 124' and the second handle unit 124" are end handle units. The grab handle 120 includes two interlocking units i.e., a first interlocking unit 164a and a second interlocking unit 164b. In an example, the first interlocking unit 164a may be similar to the interlocking unit 164 of the grab handle 118.

The second interlocking unit 164b may further include a third interlocking profile 192 and a fourth interlocking profile 196 at respective first end 186 and second end 188 of the second interlocking unit 164b. In an example, the first interlocking unit 164a and the second interlocking unit 164b are the same. For example, the second interlocking unit 164b may include similar locking portions 184 as that of the first interlocking unit 164a. In an example, the third interlocking profile 192 and fourth interlocking profile 196 are the same.

The grab handle 120 further includes the center handle unit 200 configured to be coupled between the end handle units (the first handle unit 124' and second handle unit 124"). The center handle unit 200 further defines a first end 204 and a second end 208 opposite to the first end 204. The center handle unit 200 further defines a third expansion profile 212 at the first end 204, and a fourth expansion profile 216 at the second end 208 of the center handle unit 200.

Further, the center handle unit 200 includes a grab surface 220, including one or more grab lengths 224, defined between the third expansion profile 212 and the fourth expansion profile 216. In an example, the center handle unit 200 may include a third grab length 224'. In an example, each grab length 224, of the one or more grab lengths 224, defines a standardized length of a grab space, G, for engagement by the operator. In an example, the standardized length of the grab space, G, is based on ISO 2867:2011. In an embodiment, as shown in FIG. 4, the third grab length 224' of the center handle unit 220 and the first grab length 160" of the first handle unit 124' are equal. In another embodiment, the third grab length 224' of the center handle unit 220 and the first grab length 160" of the first handle unit 124' may be different.

In an example, the third expansion profile 212 and the fourth expansion profile 216 may include a surface 228 defining one or more grooves 232 disposed thereon. The grooves 232 may include shoulder 236 within the grooves 232 (see FIG. 4). In an example, the grooves 232 may be similar to the grooves 152 of the expansion profile 144.

In an exemplary assembly of the grab handle 120, the first interlocking profile 168 and the second interlocking profile 176 of the first interlocking unit 164a, are to be coupled with the first expansion profile 146 of the first handle unit 124' and the third expansion profile 212 of the center handle unit 200, respectively. For example, in the second configuration of the grab handle 120, the first interlocking profile 168 of the first interlocking unit 164a may be coupled to the first expansion profile 146 of the first handle unit 124'. Further, the second interlocking profile 176 of the first interlocking unit 164a may be coupled to the third expansion profile 212 of the center handle unit 200.

Further, the third interlocking profile 192 and the fourth interlocking profile 196 of the second interlocking unit 164b, are to be coupled with the second expansion profile 148 of the second handle unit 124" and the fourth expansion profile 216 of the center handle unit 200, respectively. For example, in the second configuration of the grab handle 120, the third interlocking profile 192 of the second interlocking unit 164b may be coupled to the second expansion profile 148 of the second handle unit 124'. Further, the fourth interlocking profile 196 of the second interlocking unit 164b may be coupled to the fourth expansion profile 216 of the center handle unit 200.

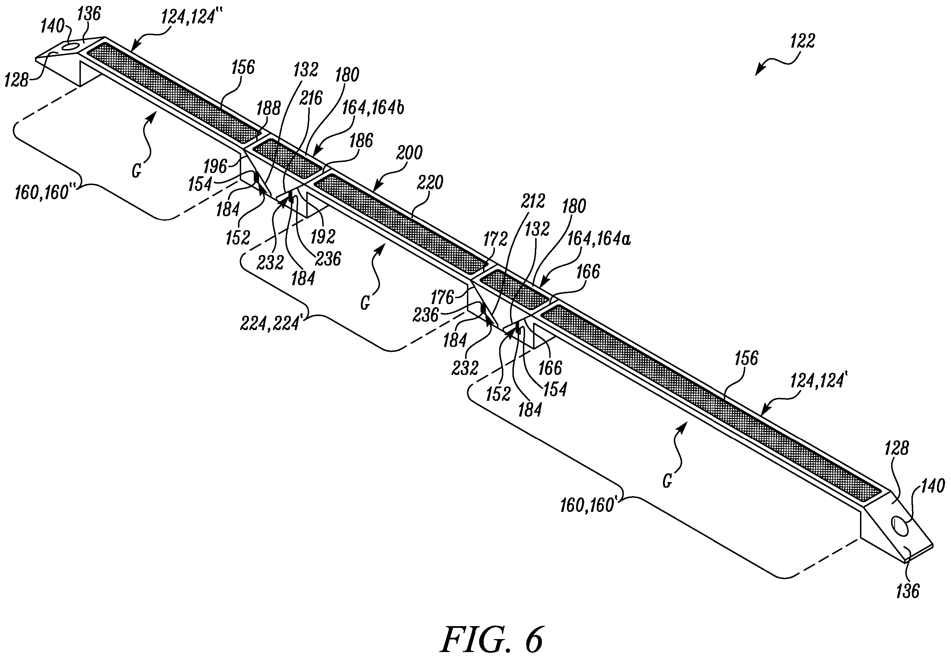

FIG 6 illustrates the grab handle 122 (i.e., third configuration of the grab handle). In the third configuration, the grab handle 122 is formed of three handle units. For example, the grab handle 122 includes the first handle unit 124', the second handle unit 124" and the center handle unit 200. Further, the grab handle 122 may include the first interlocking unit 164a and the second interlocking unit 164b. In an example, the first handle unit 124' and the second handle unit 124" may define different grab lengths 160. For example, the first handle unit 124' may define the first grab length 160' and the second handle unit 124" may define the first grab length 160". In an example, the second grab length 160" is greater than the first grab length 160'. In an example, the first handle unit 124' may include one grab length 160' and the second handle unit 124" may include two grab lengths 160'.

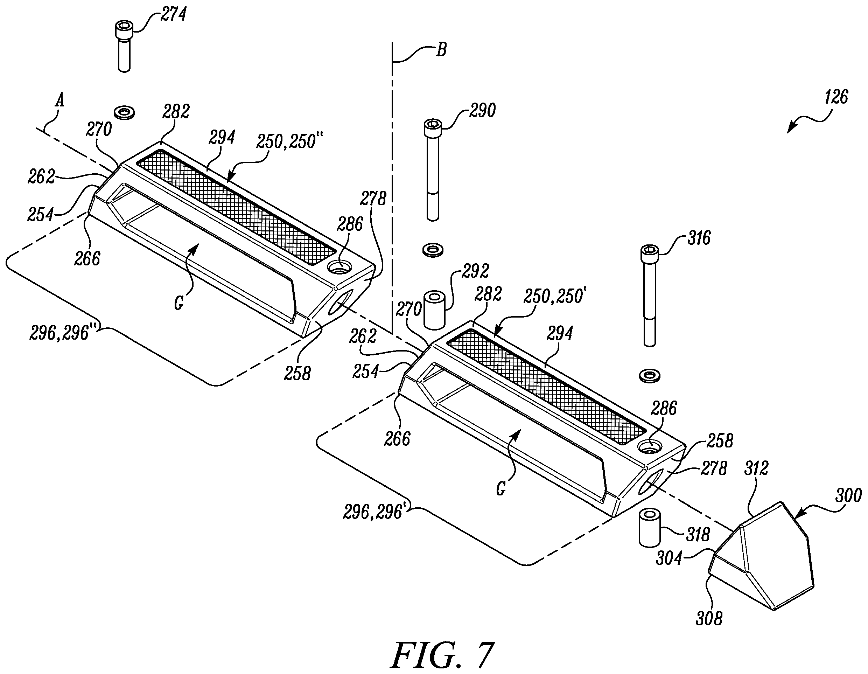

Referring now to FIGS. 7-8, another embodiment of the grab handle 126 will now be discussed. The grab handle 126 includes one or more handle units 250. Further, the grab handle 126 may also define a longitudinal axis, *A*, along the length of the handle unit 250. In an example, the grab handle 126 may include two handle units 250, namely - a first handle unit 250' and a second handle unit 250". The first handle unit 250' and the second handle unit 250" are substantially similar in shape and size. Each handle unit 250 (i.e., the first handle unit 250' and the second handle unit 250") defines a first end 254 and a second end 258 away from the first end 254.

The handle unit 250 defines a first handle engagement surface 262 at the first end 254 of each handle unit 250 for engaging an adjacent handle unit 250. Further, the handle unit 250 includes a first machine engagement surface 266 at the first end 254 of each handle unit 250 for engaging the machine 100. For example, the first machine engagement surface 266 may be configured to attach the first end 254 to the frame 104 of the machine 100. In an example, the first handle engagement surface 262 may define a hex shape, however, different shapes may be contemplated.

The handle unit 250 further defines a first bore 270 coincident with the first handle engagement surface 262 and the first machine engagement surface 266. The first bore 270 is configured to receive a first fastener 274 within the first bore 270 to be coupled with the machine 100. For example, the first end 254 of the handle unit 250 may be attached to the machine 100 by using the first fastener 274 which may be received within the first bore 270. In an example, the handle unit 250 may include a first spacer (not shown) configured to be positioned within the first bore 270.

The handle unit 250 further includes a second handle engagement surface 278 at the second end 258 of each handle unit 250. Further, the handle unit 250 includes a second machine engagement surface 282 at the second end 258 of each handle unit 250 for engaging the machine 100. For example, the second machine engagement surface 282 may be configured to attach the second end 258 to the frame 104 of the machine 100. In an example, the second handle engagement surface 278 may define a hex shape, however, different shapes may be contemplated.

The handle unit 250 further defines a second bore 286 coincident with the second handle engagement surface 278 and the second machine engagement surface 282. The second bore 286 is configured to receive a second fastener 290 within the second bore 286 to be coupled with the machine 100. In an example, the second fastener 290 is received within the second bore 286 of the first handle unit 250' and the first bore 270 of the second handle unit 250" to couple the first handle unit 250' and the second handle unit 250". In an example, the handle unit 250 may include a second spacer 292 configured to be positioned within the second bore 286. For example, the second spacer 292 may be partially received in the second bore 286 and partially received in the first bore 270 for allowing the second fastener 290 to pass therethrough to couple the first handle unit 250' and the second handle unit 250" together.

In an example, the second end 258 of the handle unit 250 may be attached to the machine 100 by using the second fastener 290 which may be received within the second bore 286. The first handle engagement surface 262 and the second handle engagement surface 278 faces opposite directions from each other. Further, the first machine engagement surface 266 and the second machine engagement surface 282 faces in opposite directions from each other. In an example, the first handle engagement surface 262 and the second handle engagement surface 278 may be configured to facilitate the expansion of the grab handle 126 by joining the handle units 250 together.

The handle unit 250 further includes a grab surface 294, including one or more grab lengths 296, defined between the first end 254 and the second end 258. In an example, the grab surface 294 may be defined as a surface for the operator to grab the grab handle 126. In an example, the grab surface 294 may be defined along the longitudinal axis, *A*, of the grab handle 126. In an example, depending on a configuration of the grab handle 126, the grab surface 294 may be integral with the first machine engagement surface 266 or the second machine engagement surface 282. In an example, the other one of the first machine engagement surface 266 or the second machine engagement surface 282 extends along a surface of the machine 100. For example, in an embodiment, the grab surface 294 may be integral with the second machine engagement surface 282 and the first machine engagement surface 266 extends along a surface of the machine 100. In an example, the grab space, G, may be hex shape when viewed from a direction perpendicular to the longitudinal axis A of the grab handle 250.

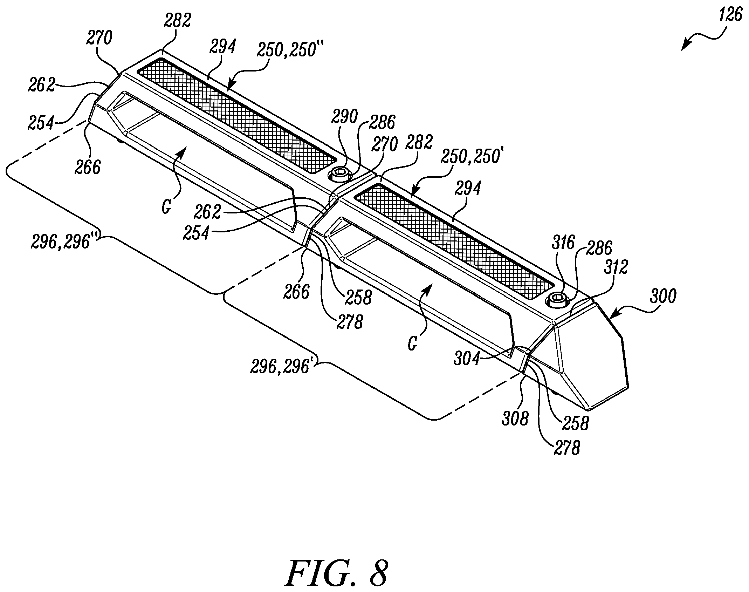

In an example, the first handle unit 250' and the second handle unit 250" may define grab lengths 296. Each grab length 296, of the one or more grab lengths 296, defines a standardized length of a grab space, G, for engagement by the operator. In an example, the standardized length of the grab space, G, is [insert ISO standard]. In an example, the first handle unit 250' may include a first grab length 296' and the second handle unit 250" may include a second grab length 296". In an embodiment, as shown in FIG. 8, the first grab length 296' and the second grab length 296" are equal. In another embodiment, the first grab length 296' and the second grab length 296" may be different. For example, the first handle unit 250' may consist of one grab length 296, and the second handle unit 250" may consist of two grab lengths 296.

The handle unit 250 further includes a termination unit 300. The termination unit 300 defines a third handle engagement surface 304 and a third machine engagement surface 308. In an example, the third handle engagement surface 304 may be configured to be coupled with the first handle engagement surface 262 or the second handle engagement surface 278. The termination unit 300 further defines a third bore 312 coincident with the third handle engagement surface 304 and the third machine engagement surface 308. The third bore 312 is configured to receive the second fastener 290 or a third fastener 316 within the third bore 312 to be coupled with the machine 100. For example, in a configuration wherein only the first handle unit 250' is used, the third bore 312 may be configured to receive the second fastener 290. Further, in a configuration wherein the first handle unit 250' and the second handle unit 250" are used, the third bore 312 may be configured to receive the third fastener 316. In an example, the handle unit 250 may include a third spacer 318 configured to be positioned within the third bore 312. For example, the third spacer 318 may be partially received in the third bore 312 and may be partially received in the second bore 286 for allowing the third fastener 316 to pass therethrough to couple the second handle unit 250" with the termination unit 300.

FIGS 7 and 8 illustrate the grab handle 126 in its first configuration. In the first configuration, the grab handle 126 may include the first handle unit 250' and the second handle unit 250". In an example, the first machine engagement surface 266 of the first handle unit 250' may be coupled with the machine 100 via the first fastener 274. In an example, the second handle engagement surface 278 of the first handle unit 250' may be coupled with the first handle engagement surface 262 of the second handle unit 250" and may be coupled with the machine 100 via the second fastener 290.

The grab handle 126 may further include the termination unit 300. In an example, the second handle engagement surface 278 of the second handle unit 250" may be coupled with the third handle engagement surface 304 of the termination unit 300 and coupled with the machine 100 via the third fastener 316. For example, the termination unit 300 may be placed towards the second end 258 of the second handle unit 250" and the third fastener 316 may be inserted into the third bore 312 to couple the termination unit 300 with the second handle unit 250" and the frame 104 of the machine 100.

### Industrial Applicability

The grab handle 118 may be used in any suitable machine 100 to provide the contact point to the operator on the machine 100. For example, the grab handle 118 on the power source 112 may be used by the operator to access and service multiple systems (e.g., propulsion system, transmission system, etc.,) of the machine 100. Similarly, the grab handle 118 on the cab (not shown) may be used by the operator to get inside the cab. In addition, the grab handle 118 may be used in different on the shape, size, and configuration of the machine 100.

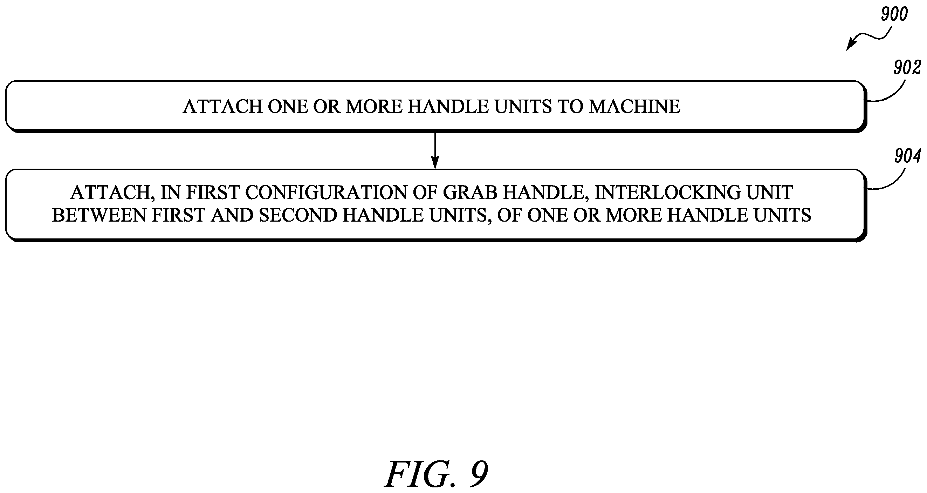

Referring now to FIG. 9, an exemplary method for method for installing the grab handle 118 for providing one or more contact points, C, for an operator on the exterior 106 of the machine 100, is discussed. The method is discussed by way of a flowchart 900 that illustrates exemplary stages (e.g., 902, and 904) associated with the method. It will be appreciated that the order of steps described in the method is exemplary in nature and that the steps can be performed in a different order than what is set out below, as will be contemplated by a person skilled in the art based on the description of the present disclosure.

The method begins by attaching the handle units 124 to the machine 100, at block 902. In an example, the method may include attaching the first handle unit 124' and the second handle unit 124" on the exterior 106 of the machine 100. In an example, the first handle unit 124' and the second handle unit 124" may be attached to the exterior 106 of the machine 100 by using fasteners. In an example, the fasteners may be received within the bore 140 to attach the first handle unit 124' and the second handle unit 124" to machine 100. In some embodiments, the handle units 124 may be attached to the machine 100 by any suitable means.

At block 904, the method includes attaching, in a first configuration of the grab handle 118, the interlocking unit 164 between the first handle unit 124' and the second handle unit 124", of the one or more handle units 124. For example, the method includes attaching the interlocking unit 164 between the first handle unit 124' and the second handle unit 124".

To attach the interlocking unit 164 between the first handle unit 124' and the second handle unit 124", the first interlocking profile 168 of the interlocking unit 164 may be coupled to the first expansion profile 146 of the first handle unit 124', and the second interlocking profile 176 of the interlocking unit 164 may be coupled to the second expansion profile 148 of the second handle unit 124". In an example, to couple the first interlocking profile 168 and second interlocking profile 176 with the respective first expansion profile 146 and second expansion profile 148, the interlocking unit 164 may be moved, relative to the first handle unit 124' and the second handle unit 124", along an axis, B, that is perpendicular to the longitudinal axis, *A*, of the grab handle 118.

The interlocking unit 164 may be moved, for example, along the axis, B, in a manner that the first interlocking profile 168 and the second interlocking profile 176 may correspondingly slide within the first expansion profile 146 and second expansion profile 148 such that the portions 184 of the first interlocking profile 168 and the second interlocking profile 176 are engaged with their respective shoulders 154 (defined on the first expansion profile 146 and the second expansion profile 148) to lock the interlocking unit 164 with the first handle unit 124' and the second handle unit 124".

For example, to couple the first interlocking profile 168 and second interlocking profile 176 with the respective first expansion profile 146 and second expansion profile 148, the locking portions 184 of the interlocking unit 164 may be received within corresponding grooves 152 of the handle unit 124 to snap fit the interlocking unit 164 between the first handle unit 124' and the second handle unit 124". At this point, the locking portions 184 of the interlocking unit 164 may attach to the respective shoulder 154 of the handle unit 124 to lock the interlocking unit 164.

In an example, the interlocking unit 164 may be attached between the first handle unit 124' and the second handle unit 124" before the one or more handle units 124 are attached to the machine 100. For example, at first, the interlocking unit 164 may be coupled between the two handle units 124. Once the interlocking unit 164 is coupled between the handle units 124, the method may include attaching the handle units 124 to the machine 100, for example, via using fasteners. That is, the fasteners may be received within the bore 140 coincident with the engagement surface 136 of each handle unit 124. In an example, the first end 128 of the handle unit 124 may be attached to the machine 100 by using the fastener which may be received within the bore 140 of the engagement surface 136. Thus, the fasteners may be used to engage the first end 128 of the first handle unit 124' and the second end 132 of the second handle unit 124" to couple the grab handle 118 to the machine 100.

The grab handle 118 of the present disclosure may allow using the same grab handle 118 at multiple contact points, C, on the machine 100. The interlocking unit 164 may allow to increase a length of the grab handle 118 attached various locations on the machine 100. Further, using grab handle 118 of different sizes with an interlocking unit 164, enables varying grab lengths, thereby significant savings in part numbers, inventory locations, and part price, resulting in reduced enterprise costs and improved efficiency. In an example, the grab handle 118 may be retrofitted to any type of machine 100 or any type of equipment. For example, the grab handle 118 of the present disclosure provides flexible configurations as per the requirements of the machine 100.

It will be apparent to those skilled in the art that various modifications and variations can be made to the method and/or system of the present disclosure without departing from the scope of the disclosure. Other embodiments will be apparent to those skilled in the art from consideration of the specification and practice of the method and/or system disclosed herein. It is intended that the specification and examples be considered as exemplary only, with a true scope of the disclosure being indicated by the following claims and their equivalent.

## Claims

1. A grab handle (118, 120, 122, 126) for providing one or more contact points for an operator on an exterior (106) of a machine (100), the grab handle (118, 120, 122, 126) comprising:
one or more handle units (124), wherein each handle unit (124) of the one or more handle units (124) defines:
an engagement surface (136) at a first end (128) of each handle unit (124) for engaging the machine (100);
a bore (140) coincident with the engagement surface (136) and configured to receive a fastener within the bore (140) to be coupled with the machine (100);
an expansion profile (144) at a second end (132) of each handle unit (124) opposite the first end (128); and
a grab surface (156), including one or more grab lengths (160), defined between the engagement surface (136) and the expansion profile (144),
wherein each grab length (160), of the one or more grab lengths (160), defines a standardized length of grab space for engagement by the operator; and
an interlocking unit (164) that defines first and second interlocking profiles (168, 176) at respective first and second opposite ends (166, 172) of the interlocking unit (144),
wherein, in a first configuration of the grab handle (118, 120, 122, 126), the first and second interlocking profiles (168, 176) of the interlocking unit (164), are to be coupled with respective first and second expansion profiles (146, 148) of first and second handle units (124', 124"), of the one or more handle units (124), to form the first configuration of the grab handle (118, 120, 122, 126).

2. The grab handle (118, 120, 122, 126) of claim 1, wherein the first and second handle units (124', 124") consist of different grab lengths (160).

3. The grab handle (118, 120, 122, 126) of claim 1, wherein the first handle unit (124') consists of one grab length (160) and the second handle unit (124") consists of two grab lengths (160).

4. The grab handle (118, 120, 122, 126) of claim 1, wherein the standardized length of grab space is based on ISO 2867:2011.

5. The grab handle (118, 120, 122, 126) of claim 1, wherein the first and second interlocking profiles (168, 176) are the same.

6. The grab handle (118, 120, 122, 126) of claim 1, wherein the interlocking unit (164) is configured to be flush with respective grab surfaces (156) of the first and second handle units (124', 124").

7. The grab handle (118, 120, 122, 126) of claim 1, wherein, in a second or third configuration of the grab handle (118, 120, 122, 126), the first and second handle units (124', 124") are end handle units and the interlocking unit (164) is a first interlocking unit (164a), and the grab handle (118, 120, 122, 126) further comprises:
a second interlocking unit (164b) that defines third and fourth interlocking profiles (192, 196) at respective first and second opposite ends (186, 188) of the second interlocking unit (164b); and
a center handle unit (200) coupled between the end handle units, the center handle (200) unit defining:
third and fourth expansion profiles (212, 216) at respective first and second opposite ends (204, 208) of the center handle unit (200); and
a grab surface (220), including one or more grab lengths (224), defined between the third and fourth expansion profiles (212, 216), wherein, to form the second configuration of the grab handle (118, 120, 122, 126):
the first and second interlocking profiles (168, 176), of the first interlocking unit (164), are to be coupled with the first expansion profile (146) of the first handle unit (124) and the third expansion profile (212) of the center handle unit (200), respectively; and
the third and fourth interlocking profiles (192, 196), of the second interlocking unit (164b), are to be coupled with the second expansion profile (148) of the second handle unit (124") and the fourth expansion profile (196) of the center handle unit (200), respectively.

8. The grab handle (118, 120, 122, 126) of claim 7, wherein respective center handle units (200), of the second and third configurations, consist of different grab lengths (224), wherein the first interlocking unit (164a) and the second interlocking unit (164b) are the same, and wherein the third and fourth interlocking profiles (192, 196) are the same.

9. A grab handle (118, 120, 122, 126) for providing one or more contact points for an operator on an exterior (106) of a machine (100), the grab handle (118, 120, 122, 126) comprising:
one or more handle units (124), wherein each handle unit (124) of the one or more handle units (124) defines:
a first handle engagement surface (262) at a first end (254) of each handle unit (124) for engaging an adjacent handle unit (124);
a first machine engagement surface (266) at the first end (254) of each handle unit (124) for engaging the machine (100);
a first bore (270) coincident with the first handle engagement surface (278) and the first machine engagement surface (266) and configured to receive a first fastener (274) within the first bore (270) to be coupled with the machine (100);
a second handle engagement surface (278) at a second end (258) of each handle unit (124) opposite the first end (254);
a second machine engagement surface (282) at the second end (258) of each handle unit (124);
a second bore (286) coincident with the second handle engagement surface (278) and the second machine engagement surface (282) and configured to receive a second fastener (290) within the second bore (286) to be coupled with the machine (100),
wherein the first and second handle engagement surfaces (262, 278) face in opposite directions from each other, and
wherein the first and second machine engagement surfaces (266, 282) face in opposite directions from each other; and
a grab surface (294), including one or more grab lengths (296), defined between the first end (254) and the second end (258),
wherein each grab length (296), of the one or more grab lengths (296), defines a standardized length of grab space for engagement by the operator; and
a termination unit (300) that defines a third handle engagement surface (304), a third machine engagement surface (308), and a third bore (312) coincident with the third handle engagement surface (304) and the third machine engagement surface (308) and configured to receive the second fastener (292) or a third fastener (316) within the third bore (312) to be coupled with the machine (100).

10. The grab handle (118, 120, 122, 126) of claim 9, wherein, in a first configuration, the grab handle (118, 120, 122, 126) includes:
first and second handle units (124', 124"), of the one or more handle units (124); and
the termination unit (300),
wherein the first machine engagement surface (266) of the first handle unit (124') is coupled with the machine (100) via the first fastener (274),
wherein the second handle engagement surface (278) of the first handle unit (124') is coupled with the first handle engagement surface (262) of the second handle unit (124") and coupled with the machine (100) via the second fastener (290), and
wherein the second handle engagement surface (278) of the second handle unit (124") is coupled with the third handle engagement surface (304) of the termination unit (300) and coupled with the machine (100) via the third fastener (316).
